(19) Europäisches Patentamt
European Patent Office
Office européen des brevets

(11) **EP 4 708 715 A1**

(12) **EUROPEAN PATENT APPLICATION**
published in accordance with Art. 153(4) EPC

(43) Date of publication:
**11.03.2026 Bulletin 2026/11**

(21) Application number: **24810271.7**

(22) Date of filing: **14.05.2024**

(51) International Patent Classification (IPC):
**H04B 7/06** (2006.01)

(52) Cooperative Patent Classification (CPC):
**H04B 7/024; H04B 7/0456; H04B 7/06; H04L 25/02**

(86) International application number:
**PCT/CN2024/093201**

(87) International publication number:
**WO 2024/240024 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.05.2023 CN 202310576298**

(71) Applicant: **Huawei Technologies Co., Ltd.**
**Shenzhen, Guangdong 518129 (CN)**

(72) Inventors:
• **LI, Ting**
**Shenzhen, Guangdong 518129 (CN)**

• **GAO, Junhui**
**Shenzhen, Guangdong 518129 (CN)**
• **WANG, Xiaohan**
**Shenzhen, Guangdong 518129 (CN)**
• **YANG, Pei**
**Shenzhen, Guangdong 518129 (CN)**
• **CHEN, Xinyue**
**Shenzhen, Guangdong 518129 (CN)**

(74) Representative: **Körber, Martin Hans**
**Mitscherlich PartmbB**
**Karlstraße 7**
**80333 München (DE)**

(54) **CHANNEL STATE INFORMATION DETERMINATION METHOD AND APPARATUS**

(57) This application provides a method for determining channel state information and an apparatus, relating to the field of communication technologies, to improve accuracy of CSI fed back by a terminal. In the method, a terminal may determine, based on a plurality of reference signals on a plurality of reference signal resources and a plurality of power offsets, a precoding matrix that matches a channel for actual transmission, so that a CQI obtained based on the precoding matrix conforms to channel quality of the channel for actual transmission. In other words, in this case, the terminal can obtain an accurate CQI, thereby improving accuracy of CSI fed back by the terminal to a network device, and improving transmission performance.

```
┌─────────────────────────────────────┐
│ S401: A terminal receives a plurality of │
│ reference signals on a plurality of reference │
│ signal resources │
└─────────────────────────────────────┘
                    │
                    ▼
┌─────────────────────────────────────┐
│ S402: The terminal sends CSI │
└─────────────────────────────────────┘
```

FIG. 4

**Description**

This application claims priority to Chinese Patent Application No. 202310576298.X, filed with the China National Intellectual Property Administration on May 19, 2023 and entitled "METHOD FOR DETERMINING CHANNEL STATE INFORMATION AND APPARATUS", which is incorporated herein by reference in its entirety.

**TECHNICAL FIELD**

This application relates to the field of communications, and in particular, to a method for determining channel state information and an apparatus.

**BACKGROUND**

Currently, to improve throughput performance of communication systems and user experience, multi-station coordination is commonly used to serve users, that is, a plurality of transmission reception points (transmission reception points, TRPs) jointly serve a single user. There are various forms of multi-station coordination, for example, coherent joint transmission (coherent joint transmission, CJT) and non-coherent joint transmission (non-coherent joint transmission, NCJT). In CJT coordination, a terminal needs to feed back channel state information (channel state information, CSI) of each TRP to a base station, to enable coherent joint transmission.

However, because the TRPs may have different powers, the CSI of each TRP fed back by the terminal to the base station may be inaccurate, degrading transmission performance. Therefore, how to improve accuracy of CSI fed back by a terminal is a hot topic in current research.

**SUMMARY**

Embodiments of this application provide a method for determining channel state information CSI and an apparatus, to improve accuracy of CSI fed back by a terminal, thereby improving transmission performance.

To achieve the foregoing objective, this application uses the following technical solutions.

According to a first aspect, a method for determining CSI is provided, and is performed by a terminal. The method includes: The terminal receives a plurality of reference signals on a plurality of reference signal resources, and sends CSI, where each of the plurality of reference signal resources is associated with one power offset, and there are a plurality of power offsets in total. The CSI includes a CQI determined based on a precoding matrix. The precoding matrix is determined based on the plurality of reference signals and the plurality of power offsets. Any one of the plurality of power offsets indicates a ratio of transmission energy of downlink data associated with a reference signal resource associated with the power offset to energy of a reference signal on the reference signal resource.

It can be learned from the method according to the first aspect that there are the plurality of power offsets when a plurality of network devices simultaneously serve the terminal. When there are different power offsets in the plurality of power offsets, a channel obtained through channel estimation by the terminal may differ from a channel for actual transmission. In this case, a precoding matrix obtained based on the channel obtained through the channel estimation does not match the channel for actual transmission. Further, a CQI obtained based on the precoding matrix does not conform to channel quality of the channel for actual transmission. In other words, the CQI is inaccurate. Therefore, when performing channel estimation based on the plurality of reference signals on the plurality of reference signal resources, the terminal may consider adjusting a channel by using the plurality of power offsets. Specifically, the terminal may determine, based on the plurality of reference signals and the plurality of power offsets, a precoding matrix that matches the channel for actual transmission, so that a CQI obtained based on the precoding matrix also conforms to the channel quality of the channel for actual transmission. In other words, in this case, the terminal may obtain an accurate CQI, thereby improving accuracy of CSI fed back by the terminal to the network device, and improving transmission performance.

It may be understood that the network device may also be understood as a TRP.

In a possible design solution, at least two of the plurality of power offsets have different values, to determine the precoding matrix based on the plurality of reference signals and the plurality of power offsets when there are power offsets with different values in the plurality of power offsets, thereby determining the CQI. For a case in which there are a plurality of power offsets with a same value, refer to the foregoing description for understanding. Details are not described herein again.

In a possible design solution, the plurality of reference signals on the plurality of reference signal resources are used to determine a downlink equivalent channel associated with the plurality of reference signal resources, and the precoding matrix is determined based on the downlink equivalent channel and the plurality of power offsets. In other words, a difference between the downlink equivalent channel and the channel for actual transmission may be adjusted by using the plurality of power offsets, so that the precoding matrix obtained based on the adjusted channel is a precoding matrix that matches the channel for actual transmission.

Optionally, the downlink equivalent channel and the plurality of power offsets satisfy the following relationship:

$$\left[\sqrt{P_{C1}}\tilde{H}_1, \ldots, \sqrt{P_{Cn}}\tilde{H}_n, \ldots, \sqrt{P_{CN}}\tilde{H}_N\right] \xrightarrow{\text{SVD}} \begin{bmatrix} \tilde{W}_1 \\ \vdots \\ \tilde{W}_n \\ \vdots \\ \tilde{W}_N \end{bmatrix}$$, where $P_{Cn}$ is a power offset associated with an $n$th reference signal resource in the plurality of reference signal resources, $[\tilde{H}_1, \ldots, \tilde{H}_n, \ldots, \tilde{H}_N]$ is the downlink equivalent channel, $n$

ranges from 1 to $N$, $N$ is a quantity of the plurality of reference signal resources, $\begin{bmatrix} \tilde{W}_1 \\ \vdots \\ \tilde{W}_n \\ \vdots \\ \tilde{W}_N \end{bmatrix}$ is the precoding matrix, and SVD is singular value decomposition. In other words, the terminal may adjust each downlink equivalent channel submatrix in the downlink equivalent channel by using the plurality of power offsets, to obtain an adjusted downlink equivalent channel, and perform the singular value decomposition on the adjusted downlink equivalent channel, so that the precoding matrix is quickly and accurately obtained.

In a possible design solution, energy of the reference signal on the reference signal resource associated with any one of the plurality of power offsets indicates energy of a reference signal port corresponding to the reference signal resource. In other words, the energy of the reference signal on the reference signal resource may be accurately obtained through the reference signal port corresponding to the reference signal resource.

Optionally, the reference signal is a CSI-RS, and energy of a CSI-RS port corresponding to a CSI-RS resource associated with any one of the plurality of power offsets indicates energy of all CSI-RS ports corresponding to the CSI-RS resource.

Further, the energy of all the CSI-RS ports corresponding to the CSI-RS resource associated with any one of the plurality of power offsets indicates energy of all the CSI-RS ports corresponding to the CSI-RS resource on one RE.

In a possible design solution, the transmission energy of the downlink data associated with the reference signal resource associated with any one of the plurality of power offsets indicates energy of a port that is used for transmission of the downlink data and that corresponds to the reference signal resource. In other words, the transmission energy of the downlink data associated with the reference signal resource may be accurately obtained through the port that is used for transmission of the downlink data and that corresponds to the reference signal resource.

Optionally, the reference signal resource is a CSI-RS resource. The port used for transmission of the downlink data is a PDSCH port, and energy of a PDSCH port corresponding to the CSI-RS resource associated with any one of the plurality of power offsets indicates energy of all PDSCH ports corresponding to the CSI-RS resource.

Further, the energy of all the PDSCH ports corresponding to the CSI-RS resource associated with any one of the plurality of power offsets indicates energy of all the PDSCH ports corresponding to the CSI-RS resource on one RE.

In a possible design solution, the method according to the first aspect further includes: The terminal receives configuration information, where the configuration information indicates the plurality of power offsets, to achieve on-demand configuration. For example, when the plurality of power offsets are all the same, the configuration information may indicate a plurality of same power offsets, or may indicate only one power offset. For another example, when the plurality of power offsets are all different, the configuration information may indicate each of the plurality of power offsets, so that each power offset can be configured more flexibly. Alternatively, the plurality of power offsets may be preconfigured by the terminal or protocol-predefined. This is not limited.

Optionally, the configuration information is carried in any one of the following messages: an RRC message, a MAC CE message, or a DCI message. In other words, the configuration information may be implemented by reusing an existing message, or may be implemented by using a message newly defined in the future. This is not limited herein.

According to a second aspect, a communication apparatus is provided. The communication apparatus includes modules configured to perform the method according to the first aspect, for example, a transceiver module and a processing module. For example, the transceiver module is configured to receive a plurality of reference signals on a plurality of reference signal resources, and the processing module is configured to generate channel state information CSI. Each of the plurality of reference signal resources is associated with one power offset, and there are a plurality of power offsets in total. The CSI includes a channel quality indicator CQI determined based on a precoding matrix. The precoding matrix is determined based on the plurality of reference signals and the plurality of power offsets. Any one of the plurality of power offsets indicates a ratio of transmission energy of downlink data associated with a reference signal resource associated with the power offset to energy of a reference signal on the reference signal resource. The transceiver module is further configured to send the CSI.

Optionally, the transceiver module may include a sending module and a receiving module. The sending module is configured to implement a sending function of the communication apparatus according to the second aspect. The receiving module is configured to implement a receiving function of the communication apparatus according to the second aspect.

Optionally, the communication apparatus according to the second aspect may further include a storage module, and the storage module stores a program or instructions. When the processing module executes the program or the instructions, the communication apparatus is caused to perform the method according to the first aspect.

It may be understood that the communication apparatus according to the second aspect may be a terminal, for example, a remote device, may be a chip (system) or another component or part that may be disposed in the terminal, or may be an apparatus including the terminal. This is not limited in this application.

In addition, for technical effects of the communication apparatus according to the second aspect, refer to the technical effects of the method according to the first aspect. Details are not described herein again.

According to a third aspect, a communication apparatus is provided. The communication apparatus includes a processor. The processor is configured to perform the method according to any one of the possible implementations of the first aspect.

In a possible design solution, the communication apparatus according to the third aspect may further include a transceiver. The transceiver may be a transceiver circuit or an interface circuit. The transceiver may be used by the communication apparatus according to the third aspect to communicate with another communication apparatus.

In a possible design solution, the communication apparatus according to the third aspect may further include a memory. The memory may be integrated with the processor, or may be disposed separately from the processor. The memory may be configured to store a computer program and/or data related to the method according to the first aspect.

In this embodiment of this application, the communication apparatus according to the third aspect may be the terminal according to the first aspect, a chip (system) or another component or part that may be disposed in the terminal, or an apparatus including the terminal.

In addition, for technical effects of the communication apparatus according to the third aspect, refer to the technical effects of the method according to any one of the implementation of the first aspect. Details are not described herein again.

According to a fourth aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In this embodiment of this application, the communication apparatus according to the fourth aspect may be the terminal according to the first aspect, a chip (system) or another component or part that may be disposed in the terminal, or an apparatus including the terminal.

In addition, for technical effects of the communication apparatus according to the fourth aspect, refer to the technical effects of the method according to any one of the implementation of the first aspect. Details are not described herein again.

According to a fifth aspect, a communication apparatus is provided. The apparatus includes a processor and a memory. The memory is configured to store a computer program. When the processor executes the computer program, the communication apparatus is caused to perform the method according to any one of the implementation of the first aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the terminal according to the first aspect, a chip (system) or another component or part that may be disposed in the terminal, or an apparatus including the terminal.

In addition, for technical effects of the communication apparatus according to the fifth aspect, refer to the technical effects of the method according to any one of the implementation of the first aspect. Details are not described herein again.

According to a sixth aspect, a computer-readable storage medium is provided, including a computer program or instructions. When the computer program or the instructions are run on a computer, the computer is caused to perform the method according to any one of the possible implementations of the first aspect.

According to a seventh aspect, a computer program product is provided, including a computer program or instructions. When the computer program or the instructions are run on a computer, the computer is caused to perform the method according to any one of the possible implementations of the first aspect.

**BRIEF DESCRIPTION OF DRAWINGS**

FIG. 1 is a schematic flowchart in which a network device obtains CSI in an FDD system according to an embodiment of this application;
FIG. 2 is a diagram of a CJT scenario according to an embodiment of this application;
FIG. 3 is a diagram of an architecture of a communication system according to an embodiment of this application;
FIG. 4 is a schematic flowchart of a method for determining CSI according to an embodiment of this application;
FIG. 5 is a diagram 1 of a structure of a communication apparatus according to an embodiment of this application; and
FIG. 6 is a diagram 2 of a structure of a communication apparatus according to an embodiment of this application.

**DESCRIPTION OF EMBODIMENTS**

For ease of understanding, the following first describes technical terms in embodiments of this application.

1. Frequency division duplex (frequency division duplex, FDD)

FDD is a duplex technology in which uplink data transmission and downlink data transmission are performed on two different frequencies. Different from a time division duplex (time division duplex, TDD) system, in an FDD system, uplink and downlink channels are not completely reciprocal due to a large frequency spacing between them. As a result, the FDD system cannot obtain a complete downlink channel through uplink channel estimation. Therefore, in the FDD system, a terminal device needs to feed back CSI of the downlink channel to a network device, so that the network device sends downlink data based on the CSI.

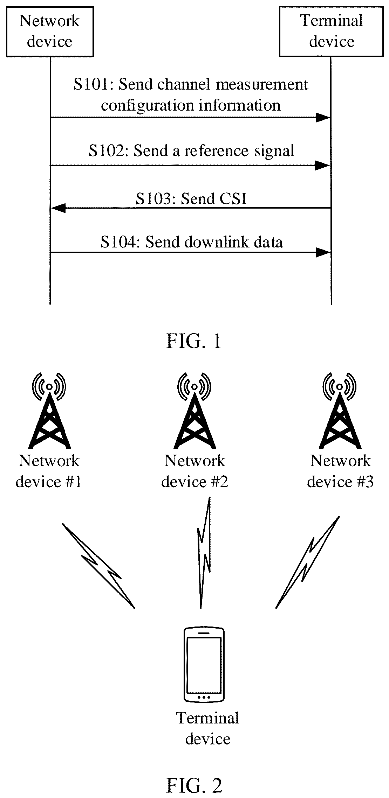

As shown in FIG. 1, a process in which the network device obtains the CSI in the FDD system includes the following steps:

S101: The network device sends channel measurement configuration information to the terminal device. The terminal device receives the channel measurement configuration information.

The channel configuration information is used to notify the terminal device of a resource used for channel measurement, time and behavior of the channel measurement, and related configuration information. In addition, the channel configuration information includes information associated with channel state information reference signal (channel state information reference signal, CSI-RS) resource, for example, a power offset. For specific descriptions of the power offset, refer to the following related descriptions.

S102: The network device sends a reference signal to the terminal device. The terminal device receives the reference signal.

The reference signal may also be referred to as a pilot or a pilot signal, for example, a CSI-RS. The terminal device may perform channel estimation by using the reference signal to obtain the CSI. The CSI includes information such as a channel quality indicator (channel quality indicator, CQI), a rank indicator (rank indicator, RI), and a precoding matrix indicator (precoding matrix indicator, PMI).

S103: The terminal device sends the CSI to the network device. The network device receives the CSI.

For example, the terminal device may feed back the CSI to the network device over a physical uplink shared channel (physical uplink shared channel, PUSCH) or a physical uplink control channel (physical uplink control channel, PUCCH).

S104: The network device sends downlink data based on the CSI.

The network device may determine, based on the received CSI, a code rate and a modulation and coding scheme (modulation and coding scheme, MCS) for the downlink data transmission, determine a precoding matrix used for downlink precoding processing, process to-be-sent data by using the precoding matrix to obtain precoded downlink data, and send the precoded downlink data is performed to the terminal device.

The CSI is accurately measured and reported by the terminal device, so that overall performance of a wireless communication system can be effectively improved.

2. CQI

CQI indicate, to a network device, downlink channel quality perceived by a terminal device by using downlink channel measurement. Currently, a signal-to-interference-plus-noise ratio (signal-to-interference-plus-noise ratio, SINR) is mainly calculated by sending a reference signal from the network device to the terminal device, and a value of a CQI to be reported is determined based on an SINR. There is a mapping relationship between the value of the CQI and the SINR. In other words, determining of the CQI is related to the SINR. Specifically, the relationship between the CQI value and the SINR is as follows: In a specific condition, one CQI value is used each time, and an SINR value is adjusted based on a corresponding modulation scheme and code rate so that a block error rate (block error rate, BLER) is approximately equal to 10%. In this case, the SINR value corresponds to the CQI value.

After receiving the reference signal sent by the network device, the terminal device may determine the SINR based on the reference signal. There is usually a specific offset between downlink data transmission power and reference signal power. Therefore, the terminal device needs to calculate the SINR based on strength of the received reference signal, a power offset, strength of a received interference signal, and strength of a received noise signal. A specific formula is as follows:

$$SINR = \frac{\left\|\sqrt{P_{PDSCH}}HW\right\|^2}{P_{interference}+P_{noise}} = \frac{\left\|\sqrt{P_C P_{CSI-RS}}HW\right\|^2}{P_{interference}+P_{noise}} = \frac{P_C\|\tilde{H}W\|^2}{P_{interference}+P_{noise}} \qquad (1)$$

$P_{PDSCH}$ represents physical downlink shared channel (physical downlink shared channel, PDSCH) data transmission power. $P_{CSI-RS}$ represents reference signal power. $P_{interference}$ represents interference signal power measured by the terminal device. $P_{noise}$ represents noise signal power measured by the terminal device. $P_C$ is a power offset and represents an offset between the PDSCH data transmission power and the reference signal power, that is, $P_C = \frac{P_{PDSCH}}{P_{CSI-RS}}$. $P_C$ may be configured by the network device. To be specific, a CSI-RS resource $P_{CSI-RS}$ corresponding to each network device is associated with one $P_C$, and $P_C$ associated with the CSI-RS resource may be configured in configuration information that is sent by the network device and that corresponds to the CSI-RS resource. $H$ is a downlink physical channel between the network device and the terminal device. $\tilde{H}$ is a downlink equivalent channel considering the reference signal power. $W$ is a precoding matrix determined based on the downlink equivalent channel. $\| \|$ represents a matrix norm.

The terminal device may obtain $P_{interference}$ and $P_{noise}$ by measuring the reference signal, and obtain a value of $P_C$ based on channel measurement configuration information sent by a base station. The terminal device may further determine the downlink equivalent channel and the precoding matrix based on the reference signal, to obtain the SINR. Specifically, the terminal device may perform channel estimation based on the reference signal to obtain a channel estimation result, obtain the downlink equivalent channel based on the channel estimation result, and after determining the precoding matrix based on the downlink equivalent channel, determine the SINR based on channel measurement results ($P_{interference}$, $P_{noise}$, and $\tilde{H}$) and the precoding matrix. For a specific principle of the terminal device determining the SINR based on the precoding matrix, refer to a principle in a conventional technology. Details are not described herein again.

A CQI measurement is defined in 3GPP TS 38. 214 Release 15 (Rel.15) as follows:

For CQI calculation, the terminal device assumes that PDSCH signals of a vth layer transmitted on antenna ports [1000, ...,1000 + V - 1] may be mapped to CSI-RS ports [3000, ...,3000 + P - 1] for equivalent transmission, as given by:

$$\begin{bmatrix} y^{(3000)}(i) \\ \dots \\ y^{(3000+P-1)}(i) \end{bmatrix} = W(i) \begin{bmatrix} y^{(0)}(i) \\ \dots \\ y^{(1000+V-1)}(i) \end{bmatrix} \qquad (2)$$

$W(i)$ is a precoding matrix. A ratio of PDSCH signal power mapped ports [3000, ... ,3000 + P - 1] for transmission to CSI-RS signal power is $P_C$. The PDSCH signal power may be energy of a PDSCH port, and the CSI-RS signal power may be energy of the CSI-RS port.

It can be learned that, for the terminal device, the terminal device knows that there is a correspondence between the PDSCH port and the CSI-RS port, and the correspondence may be reflected by $W(i)$. A terminal may obtain, based on channel information, obtained by measuring the reference signal, of the downlink physical channel between the network device and the terminal device, the precoding matrix matching the downlink physical channel. The downlink physical channel may be understood as a channel used for data transmission between the network device and the terminal device.

After receiving a CQI sent by the terminal device, the network device may determine, by searching a CQI table in the protocol, a corresponding code rate and MCS for downlink data transmission, to determine spectral efficiency of the downlink data transmission. Specifically, the network device may determine, based on the CQI by indexing a cqi-Table table in the protocol TS 38.214, for example, the table 5.2.2.1-2 in TS 38.214, the code rate and the MCS for the downlink data transmission, and may determine the spectral efficiency of the downlink data transmission according to the Shannon theorem.

3. CJT

In CJT, a plurality of network devices transmit data to a terminal device through coherent transmission. In a CJT scenario, the plurality of network devices simultaneously serve the terminal device, the plurality of network devices all know data information to be transmitted to the terminal device, and each network device knows joint CSI between the network device, another network device, and a terminal.

For example, as shown in FIG. 2, a network device #1 to a network device #3 simultaneously serve a terminal device. The terminal device may measure and feed back joint CSI among a plurality of network devices, to enable coherent coordinated transmission. In other words, the network device #1 to the network device #3 are enabled to transmit data to the terminal device through coherent transmission.

It can be learned that the plurality of network devices may jointly perform precoding processing on to-be-transmitted data at a same layer. "Coherent transmission" means that the plurality of network devices may jointly transmit a data stream, so that signals sent by the plurality of network devices can be superimposed in a same direction when the signals arrive at the terminal device, thereby multiplying received signal power and greatly reducing interference. In other words, the coherent transmission can convert interference between the plurality of network devices into wanted signals, and can greatly improve data transmission performance, for example, can greatly improve an SINR.

To enable CJT transmission, the terminal device needs to report a correct CQI, and the network device determines a modulation and coding scheme (modulation and coding scheme, MCS) based on the CQI measured and reported by the terminal device, to perform good link adaptation.

It may be understood that, in the CJT scenario, each network device is configured with one CSI-RS resource. In other words, the plurality of network devices correspond to a plurality of CSI-RS resources, and each CSI-RS resource is associated with one power offset $P_C$, that is, there are a plurality of $P_C$. Because each network device configures the CSI-RS resource $P_C$ for the network device, the plurality of $P_C$ corresponding to the plurality of network devices that serve the terminal may be the same or different. It is found through research that, when there are different $P_C$ in the plurality of $P_C$, there is a problem that a precoding matrix determined by the terminal device based on a plurality of reference signals does not match a channel for actual transmission.

Specifically, when the terminal performs CSI measurement, after performing channel estimation on received CSI-RSs on the plurality of CSI-RS resources, the terminal device may obtain a channel estimation result, that is, a downlink equivalent channel $H_{CSI-RS}$, and then process $H_{CSI-RS}$, for example, perform singular value decomposition (singular value decomposition, SVD), to obtain a precoding matrix that matches $H_{CSI-RS}$. The downlink equivalent channel may be represented as: $H_{CSI-RS} = [\tilde{H}_1, \ldots, \tilde{H}_n, \ldots, \tilde{H}_N]$, where $\tilde{H}_n$ represents a downlink equivalent channel submatrix corresponding to an $n^{th}$ CSI-RS resource in the plurality of CSI-RS resources, $N$ is a quantity of the plurality of CSI-RS resources, and the quantity of the plurality of CSI-RS resources is the same as a quantity of network devices that serve the terminal device. In other words, the downlink equivalent channel includes the downlink equivalent channel submatrix corresponding to each of the plurality of CSI-RS resources.

$H_{CSI-RS}$ may reflect CSI-RS signal power. In other words, $H_{CSI-RS}$ may also be represented as:

$$H_{CSI-RS} = \sqrt{P_{CSI-RS,1}}H_1, \ldots, \sqrt{P_{CSI-RS,n}}H_n, \ldots, \sqrt{P_{CSI-RS,N}}H_N$$ , where $P_{CSI-RS,n}$ is CSI-RS signal power associated with the $n^{th}$ CSI-RS resource, and $H_n$ represents a downlink physical channel, corresponding to the $n^{th}$ CSI-RS resource, between the network device and the terminal device.

An equivalent channel corresponding to actual PDSCH transmission is

$$\sqrt{P_{PDSCH,1}}H_1 \frac{W_1}{\|W_{a*}\|} + \cdots + \sqrt{P_{PDSCH,n}}H_n \frac{W_n}{\|W_{a*}\|} + \cdots + \sqrt{P_{PDSCH,N}}H_N \frac{W_n}{\|W_{a*}\|} =$$

$$\frac{1}{\|W_{a*}\|}\left[\sqrt{P_{PDSCH,1}}H_1 + \cdots + \sqrt{P_{PDSCH,n}}H_n + \cdots + \sqrt{P_{PDSCH,N}}H_N\right]\begin{bmatrix}W_1\\\vdots\\W_n\\\vdots\\W_N\end{bmatrix}$$ , where $P_{PDSCH,n}$ is energy of downlink data transmission associated with the $n^{th}$ CSI-RS resource, $\frac{1}{\|W_{a*}\|}\begin{bmatrix}W_1\\\vdots\\W_n\\\vdots\\W_N\end{bmatrix}$ is a result of normalizing a precoding matrix obtained based on $H_{CSI-RS}$ when the terminal device performs the CSI measurement, and $W_{a*}$ is a precoding submatrix, among N precoding submatrices $W_n$, with a largest matrix norm $\|W_n\|$. In other words, the foregoing equivalent channel corresponding to the actual PDSCH transmission is an equivalent channel considering the precoding matrix. Therefore, a channel $H_{PDSCH}$ for actual transmission may be determined based on a channel $H_n$ corresponding to each CSI-RS resource and PDSCH signal power corresponding to the CSI-RS resource, that is

$$H_{PDSCH} = \left[\sqrt{P_{PDSCH,1}}H_1, \dots, \sqrt{P_{PDSCH,n}}H_n, \dots, \sqrt{P_{PDSCH,N}}H_N\right].$$ In other words, the channel for actual transmission is an equivalent channel without considering the precoding matrix. Because a ratio of $P_{PDSCH}$ to $P_{CSI\text{-}RS}$ is $P_C$, the channel for actual transmission may also be determined based on the channel $H_n$ corresponding to each CSI-RS resource, reference signal power corresponding to the CSI-RS resource, and a power offset associated with the CSI-RS resource, that is, $$H_{PDSCH} = \left[\sqrt{P_{C1}P_{CSI\text{-}RS,1}}H_1, \dots, \sqrt{P_{Cn}P_{CSI\text{-}RS,n}}H_n, \dots, \sqrt{P_{CN}P_{CSI\text{-}RS,N}}H_N\right].$$

Because there are different $P_C$ in the plurality of $P_C$, a relative relationship between a channel submatrix corresponding to each CSI-RS resource in $H_{CSI\text{-}RS}$ is different from a relative relationship between a channel submatrix associated with each CSI-RS resource in $H_{PDSCH}$. In other words, a channel characteristic of $H_{CSI\text{-}RS}$ is different from a channel characteristic of $H_{PDSCH}$. In this case, a precoding matrix determined based on $H_{CSI\text{-}RS}$ does not match $H_{PDSCH}$, and therefore, a CQI determined based on the precoding matrix does not conform to $H_{PDSCH}$. In other words, the CQI is inaccurate.

For example, there are two network devices, the network device #1 and a network device #2, respectively, that serve the terminal device. The network device #1 corresponds to a CSI-RS resource #1, and the network device #2 corresponds to a CSI-RS resource #2. A power offset $P_{C1}$ associated with the CSI-RS resource #1 is different from a power offset $P_{C2}$ associated with the CSI-RS resource #2.

The terminal device performs channel estimation based on a reference signal #1 sent by the network device #1 and a reference signal #2 sent by the network device #2, may obtain $H_{CSI\text{-}RS}$, and then, performs SVD on $H_{CSI\text{-}RS}$ to obtain a precoding matrix. A specific formula is as follows:

$$H_{CSI\text{-}RS} = \left[\tilde{H}_1, \tilde{H}_2\right] = \sqrt{P_{CSI\text{-}RS,1}}H_1 + \sqrt{P_{CSI\text{-}RS,2}}H_2 \xrightarrow{SVD} \begin{bmatrix} W_1 \\ W_2 \end{bmatrix} \qquad (3)$$

$\tilde{H}_1$ is a downlink equivalent channel submatrix corresponding to the CSI-RS resource #1, $\tilde{H}_2$ is a downlink equivalent channel submatrix corresponding to the CSI-RS resource #2, $P_{CSI\text{-}RS,1}$ is CSI-RS signal power associated with the CSI-RS resource #1, $P_{CSI\text{-}RS,2}$ is CSI-RS signal power associated with the CSI-RS resource #2, $W_1$ is a precoding submatrix #1 corresponding to the CSI-RS resource #1, $W_2$ is a precoding submatrix #2 corresponding to the CSI-RS resource #2, and $\begin{bmatrix} W_1 \\ W_2 \end{bmatrix}$ is a precoding matrix.

After obtaining $\begin{bmatrix} W_1 \\ W_2 \end{bmatrix}$, the terminal may perform normalization on $\begin{bmatrix} W_1 \\ W_2 \end{bmatrix}$, and may obtain $\frac{1}{\|w_{a*}\|}\begin{bmatrix} W_1 \\ W_2 \end{bmatrix}$, where $a* = argmax(\|W_1\|, \|W_2\|)$.

In this case, a channel for PDSCH transmission is:

$$\sqrt{P_{PDSCH,1}}H_1\frac{W_1}{\|W_{a*}\|} + \sqrt{P_{PDSCH,2}}H_2\frac{W_2}{\|W_{a*}\|} = \frac{1}{\|W_{a*}\|}\left[\sqrt{P_{C1}}\tilde{H}_1, \sqrt{P_{C2}}\tilde{H}_2\right]\begin{bmatrix} W_1 \\ W_2 \end{bmatrix} \qquad (4)$$

$P_{PDSCH,1}$ represents energy of a PDSCH port associated with the CSI-RS resource #1, $H_1$ is a channel corresponding to the CSI-RS resource #1, $\frac{W_1}{\|W_{a*}\|}$ is a normalized precoding submatrix corresponding to the CSI-RS resource #1, $P_{PDSCH,2}$ represents energy of a PDSCH port associated with the CSI-RS resource #2, $H_2$ is a channel corresponding to the CSI-RS resource #1, and $\frac{W_2}{\|W_{a*}\|}$ is a normalized precoding submatrix corresponding to the CSI-RS resource #2.

It can be learned that, during the PDSCH transmission, the channel for actual transmission may be represented as: $H_{PDSCH} = \left[\sqrt{P_{C1}P_{CSI\text{-}RS,1}}H_1, \sqrt{P_{C2}P_{CSI\text{-}RS,2}}H_2\right]$, and $H_{PDSCH}$ uses the precoding matrix obtained based on $H_{CSI\text{-}RS}$. Because a ratio of $P_{PDSCH,n}$ to $P_{CSI\text{-}RS,n}$ is $P_{Cn}$, the channel for actual transmission may also be represented as $H_{PDSCH} = \left[\sqrt{P_{C1}}\tilde{H}_1, \sqrt{P_{C2}}\tilde{H}_2\right]$. In addition, because $P_{C1}$ and $P_{C2}$ are different, $H_{PDSCH}$ and $H_{CSI\text{-}RS}$ are different,

that is, the precoding matrix obtained based on $H_{CSI-RS}$ does not match $H_{PDSCH}$. In other words, the precoding matrix obtained based on $H_{CSI-RS}$ is inaccurate, and therefore, the CQI determined based on the precoding matrix is also inaccurate. As a result, CSI fed back by the terminal device to the network device is inaccurate.

For the foregoing technical problems, this embodiment of this application proposes that the terminal device may determine, based on a plurality of reference signals and a plurality of power offsets, a precoding matrix that matches a channel for actual transmission, so that a CQI obtained based on the precoding matrix conforms to channel quality of channel for actual transmission. In other words, in this case, the terminal device may obtain an accurate CQI, thereby improving accuracy of CSI fed back by the terminal device to the network device, and improving transmission performance.

The following describes technical solutions of this application with reference to accompanying drawings.

The technical solutions in embodiments of this application may be applied to various communication systems, for example, a wireless network (Wi-Fi) system, a vehicle to everything (vehicle to everything, V2X) communication system, a device-to-device (device-to-device, D2D) communication system, an Internet of Vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5th generation (5th generation, 5G), for example, a new radio (new radio, NR) system, and a future communication system.

All aspects, embodiments, or features are presented in this application by describing a system that may include a plurality of devices, parts, modules, and the like. It should be appreciated and understood that, each system may include another device, component, module, and the like, and/or may not include all devices, parts, modules, and the like discussed with reference to the accompanying drawings. In addition, a combination of these solutions may be used.

In addition, in embodiments of this application, an expression such as "example" or "for example" represents giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in embodiments of this application may indicate an "or" relationship. Moreover, sending to A or the like mentioned in embodiments of this application is a sending behavior in which A is used as a destination address, and may be directly or indirectly sending to A. Likewise, receiving from A or the like mentioned in embodiments of this application is a receiving behavior in which A is used as a source address, and may be directly or indirectly receiving from A.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

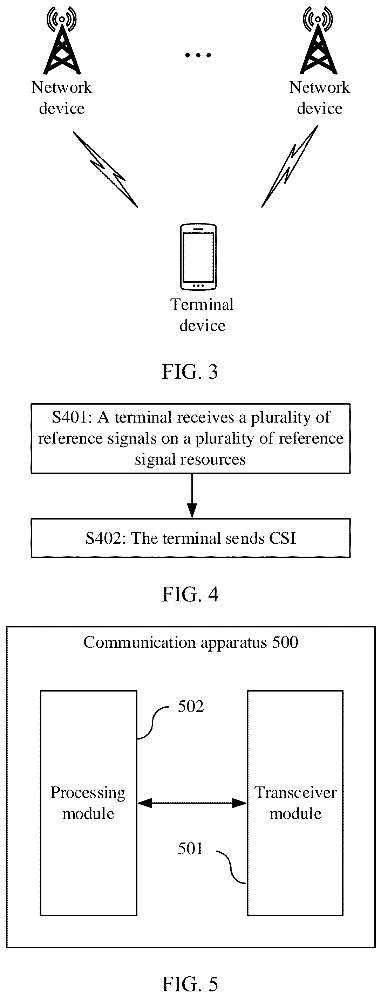

For ease of understanding embodiments of this application, a communication system shown in FIG. 3 is first used as an example to describe in detail a communication system applicable to embodiments of this application. For example, FIG. 3 is a diagram of an architecture of the communication system to which a method for determining CSI is applicable according to an embodiment of this application.

As shown in FIG. 3, the communication system mainly includes a terminal and a plurality of network devices. The plurality of network devices simultaneously serve the terminal.

The terminal is a terminal that accesses the communication system and that has a wireless transceiver function, or a chip or a chip system that may be disposed in the terminal. The terminal may also be referred to as a user apparatus, an access terminal, a subscriber unit, a subscriber station, a mobile station, a remote station, a remote terminal, a mobile device, a user terminal, a terminal, a wireless communication device, a user agent, or a user device. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the method for determining CSI provided in this application.

The network device is a device that is located on a network side of the communication system and that has a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

It may be understood that the network device may also be understood as a TRP.

In the communication system, in a scenario in which the plurality of network devices simultaneously serve the terminal. For example, in a CJT scenario, each network device is configured with one reference signal resource, and the reference signal resource is associated with one power offset. In other words, there are a plurality of power offsets. The terminal may obtain, based on a reference signal on the reference signal resource sent by each network device and a plurality of power offsets associated with reference signal resources, a precoding matrix that can match a channel for actual transmission. In other words, the precoding matrix is accurate, so that an accurate CQI can be obtained based on the precoding matrix, thereby improving accuracy of CSI fed back by the terminal to a base station, and improving transmission performance.

It should be noted that the solutions in embodiments of this application may alternatively be applied to another communication system, and a corresponding name may alternatively be replaced with a name of a corresponding function in the another communication system.

For ease of understanding, the following specifically describes a method for determining CSI provided in this embodiment of this application with reference to FIG. 4.

For example, FIG. 4 is a schematic flowchart of the method for determining CSI according to an embodiment of this application. The method is applicable to communication between a terminal and a plurality of network devices in the foregoing communication system.

As shown in FIG. 4, a procedure of the foregoing method for determining CSI is as follows.

S401: The terminal receives a plurality of reference signals on a plurality of reference signal resources.

The reference signal is carried on a reference signal resource corresponding to the reference signal, and is used for downlink channel state information measurement. The reference signal may be a CSI-RS. The terminal may perform channel estimation based on the plurality of reference signals on the plurality of reference signal resources, to obtain CSI (for details, refer to the following related descriptions).

The reference signal resource is a time-frequency resource for carrying the reference signal, for example, may be one or more resource blocks (resource block, RB), one or more REs, or a time-frequency resource of any other possible granularity. One reference signal resource corresponds to one network device. In other words, each network device may be configured to use a corresponding reference signal resource. In this way, different reference signal resources may be used to represent different network devices. In this embodiment of this application, when the terminal receives the plurality of reference signals on the plurality of reference signal resources, it indicates that there are the plurality of network devices simultaneously providing a service for the terminal. In other words, the plurality of network devices perform coordinated transmission, and a quantity of network devices that serve the terminal is equal to a quantity of the plurality of reference signal resources. For example, if the terminal receives reference signals on three reference signal resources, it indicates that three network devices simultaneously serve the terminal.

Each of the plurality of reference signal resources is associated with one power offset, and there are a plurality of power offsets in total. Any one of the plurality of power offsets indicates a ratio of transmission energy of downlink data associated with a reference signal resource associated with the power offset to energy of a reference signal on the reference signal resource. Because the reference signal resource corresponds to one network device and the network device may send downlink data, the reference signal resource is associated with the downlink data. In other words, the transmission energy of the downlink data associated with the reference signal resource is transmission energy of downlink data sent by a network device corresponding to the reference signal resource. It may be understood that, in embodiments of this application, the concepts of energy and power are equivalent, which are interchangeable description.

In a possible implementation, the energy of the reference signal on the reference signal resource associated with any one of the plurality of power offsets indicates energy of a reference signal port corresponding to the reference signal resource. In other words, the energy of the reference signal on the reference signal resource may be accurately determined through the reference signal port corresponding to the reference signal resource.

Optionally, the reference signal may be the CSI-RS, a demodulation reference signal (demodulation reference signal, DMRS), a sounding reference signal (sounding reference symbol, SRS), or the like. This is not limited in this application. For ease of understanding, the following uses the CSI-RS as an example for description. Energy of a CSI-RS port corresponding to a CSI-RS resource associated with any one of the plurality of power offsets indicates energy of all CSI-RS ports corresponding to the CSI-RS resource.

Further, the energy of all the CSI-RS ports corresponding to the CSI-RS resource associated with any one of the plurality of power offsets indicates energy of all the CSI-RS ports corresponding to the CSI-RS resource on one RE, that is, the energy of all the CSI-RS ports multiplexed on one subcarrier of one orthogonal frequency division multiplexing (orthogonal frequency division multiplexing, OFDM), and may also be understood as the energy of all the CSI-RS ports corresponding to the CSI-RS resource multiplexed on one RE.

For example, if a CSI-RS resource corresponds to four CSI-RS ports, energy of the four CSI-RS ports on one RE is a, b, c, and d, respectively, and the four CSI-RS ports are multiplexed on a same RE, energy of all CSI-RS ports corresponding to the CSI-RS resource on one RE is a+b+c+d.

In a possible implementation, the transmission energy of the downlink data associated with the reference signal resource associated with any one of the plurality of power offsets indicates energy of a port that is used for transmission of the downlink data and that corresponds to the reference signal resource. In other words, the transmission energy of the downlink data associated with the reference signal resource may be accurately determined through the port used for transmission of the downlink data.

Optionally, the reference signal resource may be a CSI-RS resource, a DMRS resource, an SRS resource, or the like. Similarly, the following uses CSI-RS as an example for description. The port used for transmission of the downlink data may be a PDSCH port, and energy of a PDSCH port corresponding to the CSI-RS resource associated with any one of the plurality of power offsets indicates energy of all PDSCH ports corresponding to the CSI-RS resource.

Further, the energy of all the PDSCH ports corresponding to the CSI-RS resource associated with any one of the plurality of power offsets indicates energy of all the PDSCH ports corresponding to the CSI-RS resource on one RE, that is, the energy of all the PDSCH ports multiplexed on one subcarrier of one OFDM, and may also be understood as the energy of all the PDSCH ports corresponding to the CSI-RS resource multiplexed on one RE.

For example, if a CSI-RS resource corresponds to four PDSCH ports, energy of the four PDSCH ports on one RE is A, B, C, and D, respectively, and the four PDSCH ports are multiplexed on a same RE, energy of all PDSCH ports corresponding to the CSI-RS resource on one RE is A+B+C+D.

It may be understood that, in a scenario in which the plurality of network devices simultaneously serve the terminal, for example, in a CJT scenario, the terminal may determine, by selecting a reference signal resource, the plurality of network devices that serve the terminal. However, for each network device, each network device cannot determine the quantity of network devices that is selected by the terminal and that provides a service for the terminal. In addition, after power normalization is performed on each network device for a same reference, when the plurality of network devices perform the coordinated transmission, an actual power difference of a PDSCH signal is reflected in a precoding power difference. Therefore, for any one of the plurality of network devices, a power offset associated with a CSI-RS resource corresponding to the network device may be energy of all PDSCH ports of the CSI-RS resource on one RE, under a single-cell transmission assumption. The single-cell transmission assumption is that the network device does not perform the coordinated transmission with another network device. In other words, it is assumed that only the network device provides a service for the terminal.

Values of power offsets in the plurality of power offsets may be the same or different.

In a possible implementation, at least two of the plurality of power offsets have different values. For example, there are three reference signal resources in total, power offsets associated with the three reference signal resources are a power offset #1, a power offset #2, and a power offset #3, respectively, and a value of the power offset #1 is equal to a value of the power offset #3. In other words, there are two reference signal resources associated with a same power offset among the three reference signal resources.

In another possible implementation, each of the plurality of power offsets has the same value. For example, there are three reference signal resources in total, power offsets associated with the three reference signal resources are a power offset #1, a power offset #2, and a power offset #3, respectively, and values of the power offset #1, the power offset #2, and the power offset #3 are equal. In other words, the power offsets associated with the three reference signal resources are the same.

The plurality of power offsets may be preconfigured by the terminal or protocol-predefined, or may be sent by another device to the terminal. When the plurality of power offsets is sent by another device to the terminal, the method for determining CSI may further include that the terminal receives configuration information.

The configuration information may indicate the plurality of power offsets. For example, when the plurality of power offsets are all the same, the configuration information may indicate a plurality of same power offsets, or may indicate only one power offset. For another example, when there are at least two different power offsets among the plurality of power offsets, the configuration information may indicate respective different power offsets. In this case, the terminal may receive the configuration information before sending the CSI (S402), to determine the CSI by using the plurality of power offsets indicated by the configuration information. In addition, the configuration information is carried in any one of the following messages: a radio resource control (radio resource control, RRC) message, a MAC control element (mac control element, MAC CE) message, or a downlink control information (downlink control information, DCI) message. In other words, the configuration information may be implemented by reusing an existing message, or may be implemented by using a message newly defined in the future. This is not limited herein.

Optionally, the configuration information may indicate related information for determining the plurality of reference signal resources, for example, a plurality of power offsets. To be specific, after receiving the configuration information, the terminal may determine the plurality of reference signal resources based on the configuration information, so that the plurality of reference signals on the plurality of reference signal resources is received. In this case, the terminal may receive the configuration information before receiving the plurality of reference signals on the plurality of reference signal resources (S401).

A quantity of the plurality of power offsets is related to whether there are at least two reference signal resources associated with the same power offset among the plurality of reference signal resources. The following describes in different cases.

Case 1:

Each reference signal resource is associated with one power offset, and values of power offsets associated with reference signal resources may be different, or may be the same. In this case, the quantity of the plurality of power offsets is the same as the quantity of the plurality of reference signal resources.

For example, there are five reference signal resources in total, power offsets associated with the five reference signal resources are $P_{C,1}$, $P_{C,2}$, $P_{C,3}$, $P_{C,4}$, and $P_{C,5}$, respectively, and values of $P_{C,1}$, $P_{C,2}$, $P_{C,3}$, $P_{C,4}$, and $P_{C,5}$ are different. In this case, there are five power offsets in total. In other words, the quantity of the plurality of power offsets is the same as the quantity of the plurality of reference signal resources.

For another example, there are five reference signal resources in total: a reference signal resource #1, a reference signal resource #2, a reference signal resource #3, a reference signal resource #4, and a reference signal resource #5, respectively, power offsets associated with the five reference signal resources are $P_{C,1}$, $P_{C,2}$, $P_{C,3}$, $P_{C,4}$, and $P_{C,5}$, respectively, and values of $P_{C,1}$, $P_{C,4}$, and $P_{C,5}$ are the same, that is, power offsets associated with the reference signal resource #1, the reference signal resource #4, and the reference signal resource #5 are the same. In this case, there are five power offsets in total. In other words, the quantity of the plurality of power offsets is the same as the quantity of the plurality of reference signal resources.

Case 2:

There are at least two reference signal resources associated with the same power offset among the plurality of reference signal resources. In this case, the quantity of the plurality of power offsets is less than the quantity of the plurality of reference signal resources.

For example, there are five reference signal resources in total: a reference signal resource #1, a reference signal resource #2, a reference signal resource #3, a reference signal resource #4, and a reference signal resource #5, respectively, and power offsets associated with the five reference signal resources are $P_{C,1}$, $P_{C,2}$, $P_{C,3}$, $P_{C,1}$, and $P_{C,1}$, respectively. In other words, the reference signal resource #1, the reference signal resource #4, and the reference signal resource #5 are associated with a same power offset, that is, $P_{C,1}$. In this case, there are three power offsets in total. In other words, the quantity of the plurality of power offsets is less than the quantity of the plurality of reference signal resources.

S402: The terminal sends the CSI.

The CSI is used to determine a code rate and an MCS for downlink data transmission, and determine a precoding matrix used for downlink precoding processing. The CSI includes the CQI determined based on the precoding matrix, and the CQI is used to represent channel quality of a channel of downlink data. For related descriptions of determining the CQI based on the precoding matrix, refer to the foregoing descriptions. Details are not described herein again.

The precoding matrix is used to perform precoding processing on a data signal, and the precoding processing is performed by using the precoding matrix that matches a channel for actual transmission, so that the data signal sent by the network device has better directivity, and a power gain can be provided for a receiving device. In this embodiment of this application, the precoding matrix is a joint precoding matrix of the plurality of network devices. In other words, the precoding matrix includes precoding submatrices respectively corresponding to the plurality of reference signal resources. In addition, the precoding matrix may be determined based on the plurality of reference signals on the plurality of reference signal resources and the plurality of power offsets.

Specifically, the terminal may determine, based on the plurality of reference signals on the plurality of reference signal resources, a downlink equivalent channel associated with the plurality of reference signal resources, and determine the precoding matrix based on the downlink equivalent channel and the plurality of power offsets. In other words, the plurality of reference signals on the plurality of reference signal resources are used to determine the downlink equivalent channel associated with the plurality of reference signal resources, and the precoding matrix is determined based on the downlink equivalent channel and the plurality of power offsets.

The downlink equivalent channel is a channel obtained through channel estimation by the terminal based on the plurality of reference signals on the plurality of reference signal resources. The downlink equivalent channel may include downlink equivalent channel submatrices corresponding to the plurality of reference signal resources. In addition, the downlink equivalent channel may also be represented by a channel corresponding to each reference signal resource in the plurality of reference signal resources and reference signal power corresponding to the channel. For related descriptions, refer to the foregoing descriptions. Details are not described herein again.

For example, there are three reference signal resources in total: a reference signal resource #1, a reference signal resource #2, and a reference signal resource #3, respectively, and downlink equivalent channel submatrices corresponding to the three reference signal resources are $\tilde{H}_1$, $\tilde{H}_2$, and $\tilde{H}_3$, respectively. A downlink equivalent channel of the three reference signal resources may include $\tilde{H}_1$, $\tilde{H}_2$, and $\tilde{H}_3$, that is, the downlink equivalent channel may be represented as $[\tilde{H}_1, \tilde{H}_2, \tilde{H}_3]$.

The precoding matrix may be obtained, after the downlink equivalent channel is adjusted by the plurality of power offsets, based on an adjusted downlink equivalent channel. There are two manners for adjusting the downlink equivalent channel based on the plurality of power offsets. The following separately describes the two manners.

Manner 1: The terminal adjusts, based on a power offset corresponding to each reference signal resource, a channel corresponding to the reference signal resource.

In this case, the downlink equivalent channel and the plurality of power offsets satisfy the following relationship:

$$\left[\sqrt{P_{C1}}\tilde{H}_1, \ldots, \sqrt{P_{Cn}}\tilde{H}_n, \ldots, \sqrt{P_{CN}}\tilde{H}_N\right] \xrightarrow{SVD} \begin{bmatrix} \widetilde{W}_1 \\ \vdots \\ \widetilde{W}_n \\ \vdots \\ \widetilde{W}_N \end{bmatrix} \qquad (5)$$

$P_{Cn}$ is a power offset associated with an $n^{th}$ reference signal resource in the plurality of reference signal resources, $[\tilde{H}_1, \ldots, \tilde{H}_n, \ldots, \tilde{H}_N]$ is the downlink equivalent channel, $\tilde{H}_n$ is a downlink equivalent channel submatrix corresponding to the $n^{th}$ reference signal resource, n ranges from 1 to $N$, $N$ is the quantity of the plurality of reference signal resources, $\begin{bmatrix} \widetilde{W}_1 \\ \vdots \\ \widetilde{W}_n \\ \vdots \\ \widetilde{W}_N \end{bmatrix}$ is a precoding matrix determined based on the plurality of power offsets, $\tilde{W}_n$ is a precoding submatrix corresponding to the $n^{th}$ reference signal resource, and SVD is singular value decomposition.

The downlink equivalent channel is the channel obtained through the channel estimation by the terminal based on the plurality of reference signals on the plurality of reference signal resources, and the downlink equivalent channel may reflect reference signal power. In other words, the downlink equivalent channel may be represented as: $\left[\sqrt{P_{CSI-RS,1}}H_1, \ldots, \sqrt{P_{CSI-RS,n}}H_n, \ldots, \sqrt{P_{CSI-RS,N}}H_N\right]$. For descriptions of $P_{CSI-RS,n}$ and $H_n$, refer to the foregoing related descriptions.

A channel for actual transmission may be represented as: $\left[\sqrt{P_{PDSCH,1}}H_1, \ldots, \sqrt{P_{PDSCH,n}}H_n, \ldots, \sqrt{P_{PDSCH,N}}H_N\right]$. For descriptions of $P_{PDSCH,n}$, refer to the foregoing related descriptions. In addition, the power offset is the ratio of the transmission energy of the downlink data associated with the reference signal resource associated with the power offset to the energy of the reference signal on the reference signal resource, that is, the power offset may also be represented as: $\dfrac{P_{PDSCH,n}}{P_{CSI-RS,n}}$. Therefore, the channel for actual transmission may also be represented by using the power offset as:

$$\left[\sqrt{P_{C1}P_{CSI-RS,1}}H_1, \dots, \sqrt{P_{Cn}P_{CSI-RS,n}}H_n, \dots, \sqrt{P_{CN}P_{CSI-RS,N}}H_N\right].$$

It can be learned that the terminal adjusts energy of $\tilde{H}_n$ based on $\sqrt{P_{Cn}}$, so that a relative relationship between each channel submatrix in the downlink equivalent channel is the same as a relative relationship between a channel submatrix corresponding to each reference signal resources during actual transmission, and a channel characteristic of the adjusted downlink equivalent channel is the same as a channel characteristic of the channel for actual transmission.

For example, there are four reference signal resources in total: a reference signal resource #1, a reference signal resource #2, a reference signal resource #3, and a reference signal resource #4, respectively, channels corresponding to the four reference signal resources are $\tilde{H}_1$, $\tilde{H}_2$, $\tilde{H}_3$, and $\tilde{H}_4$, respectively, and power offsets associated with the four reference signal resources are $P_{C1}$, $P_{C2}$, $P_{C3}$, and $P_{C4}$, respectively. The terminal may use $\sqrt{P_{C1}}$, $\sqrt{P_{C2}}$, $\sqrt{P_{C3}}$, and $\sqrt{P_{C4}}$ to adjust $\tilde{H}_1$, $\tilde{H}_2$, $\tilde{H}_3$, and $\tilde{H}_4$, respectively. In other words, energy of each channel is scaled, to obtain an adjusted downlink equivalent channel $\left[\sqrt{P_{C1}}\tilde{H}_1, \sqrt{P_{C2}}\tilde{H}_2, \sqrt{P_{C3}}\tilde{H}_3, \sqrt{P_{C4}}\tilde{H}_4\right]$.

Manner 2: The terminal uses any one of the plurality of reference signal resources as a reference and adjusts a channel other than a channel corresponding to the reference based on the plurality of power offsets.

In this case, the downlink equivalent channel and the plurality of power offsets satisfy the following relationship:

$$\left[\frac{\sqrt{P_{C1}}}{\sqrt{P_{Cm}}}\tilde{H}_1, \dots, \frac{\sqrt{P_{Cn}}}{\sqrt{P_{Cm}}}\tilde{H}_n, \dots, \frac{\sqrt{P_{CN}}}{\sqrt{P_{Cm}}}\tilde{H}_N\right] \xrightarrow{SVD} \begin{bmatrix} \tilde{W}_1 \\ \vdots \\ \tilde{W}_n \\ \vdots \\ \tilde{W}_N \end{bmatrix} \qquad (6)$$

$P_{Cn}$ is a power offset associated with an $n^{th}$ reference signal resource in the plurality of reference signal resources, $[\tilde{H}_1, \dots, \tilde{H}_n, \dots, \tilde{H}_N]$ is the downlink equivalent channel, $\tilde{H}_n$ is a downlink equivalent channel submatrix corresponding to the $n^{th}$ reference signal resource, n ranges from 1 to $N$, $m$ is any integer from 1 to $N$, $N$ is the quantity of the plurality of reference signal resources, $\begin{bmatrix} \tilde{W}_1 \\ \vdots \\ \tilde{W}_n \\ \vdots \\ \tilde{W}_N \end{bmatrix}$ is a precoding matrix determined based on the plurality of power offsets, $\tilde{W}_n$ is a precoding submatrix corresponding to the $n^{th}$ reference signal resource, and SVD is singular value decomposition.

The downlink equivalent channel is the channel obtained through the channel estimation by the terminal based on the plurality of reference signals on the plurality of reference signal resources, and the downlink equivalent channel may reflect reference signal power. In other words, the downlink equivalent channel may be represented as: $\left[\sqrt{P_{CSI-RS,1}}H_1, \dots, \sqrt{P_{CSI-RS,n}}H_n, \dots, \sqrt{P_{CSI-RS,N}}H_N\right]$. For descriptions of $P_{CSI-RS,n}$ and $H_n$, refer to the foregoing related descriptions. A channel for actual transmission may be represented as: $\left[\sqrt{P_{PDSCH,1}}H_1, \dots, \sqrt{P_{PDSCH,n}}H_n, \dots, \sqrt{P_{PDSCH,N}}H_N\right]$. For descriptions of $P_{PDSCH,n}$, refer to the foregoing related descriptions. In addition, the power offset is the ratio of the transmission energy of the downlink data associated with the reference signal resource associated with the power offset to the energy of the reference signal on the reference signal resource, that is, the power offset may also be represented as: $\frac{P_{PDSCH,n}}{P_{CSI-RS,n}}$. Therefore, the downlink equivalent channel may also be represented by using the power offset as: $\left[\frac{\sqrt{P_{C1}P_{CSI-RS,1}}}{\sqrt{P_{Cm}}}H_1, \dots, \frac{\sqrt{P_{Cn}P_{CSI-RS,n}}}{\sqrt{P_{Cm}}}H_n, \dots, \frac{\sqrt{P_{CN}P_{CSI-RS,N}}}{\sqrt{P_{Cm}}}H_N\right].$

It can be learned that the terminal adjusts, based on $\frac{\sqrt{P_{Cn}}}{\sqrt{P_{Cm}}}$, energy of another channel other than $\tilde{H}_m$, so that a relative relationship between each channel submatrix in the downlink equivalent channel is the same as a relative relationship between a channel submatrix corresponding to each reference signal resource during actual transmission, and a channel characteristic of the adjusted downlink equivalent channel is the same as a channel characteristic of the channel for actual transmission.

For example, there are four reference signal resources in total: a reference signal resource #1, a reference signal resource #2, a reference signal resource #3, and a reference signal resource #4, respectively, channels corresponding to the four reference signal resources are $\tilde{H}_1$, $\tilde{H}_2$, $\tilde{H}_3$, and $\tilde{H}_4$, respectively, and power offsets associated with the four reference signal resources are $P_{C1}$, $P_{C2}$, $P_{C3}$, and $P_{C4}$, respectively. A CSI-RS resource #1 is used as a reference, $\tilde{H}_2$ may be adjusted by using energy of $\frac{\sqrt{P_{C2}}}{\sqrt{P_{C1}}}$, $\tilde{H}_3$ may be adjusted by using energy of $\frac{\sqrt{P_{C3}}}{\sqrt{P_{C1}}}$, and $\tilde{H}_4$ may be adjusted by using energy of $\frac{\sqrt{P_{C4}}}{\sqrt{P_{C1}}}$, to obtain an adjusted downlink equivalent channel $\left[\tilde{H}_1, \frac{\sqrt{P_{C2}}}{\sqrt{P_{C1}}}\tilde{H}_2, \frac{\sqrt{P_{C3}}}{\sqrt{P_{C1}}}\tilde{H}_3, \frac{\sqrt{P_{C4}}}{\sqrt{P_{C1}}}\tilde{H}_4\right]$.

After the downlink equivalent channel is adjusted, the SVD may be performed on the adjusted downlink equivalent channel, to obtain the precoding matrix. It may be understood that the adjusted downlink equivalent channel may further be processed by using another feasible method, to obtain the precoding matrix. This is not limited herein.

In this embodiment of this application, when the plurality of reference signal resources are associated with different power offsets, the terminal may determine the precoding matrix based on the plurality of reference signals on the plurality of reference signal resources and the plurality of power offsets, so that a determined precoding matrix matches the channel for actual transmission. In other words, a CQI obtained based on the precoding matrix conforms to the channel for actual transmission. In view of this, accuracy of the obtained CQI can be improved, thereby improving accuracy of CSI fed back by the terminal to a base station, and improving transmission performance.

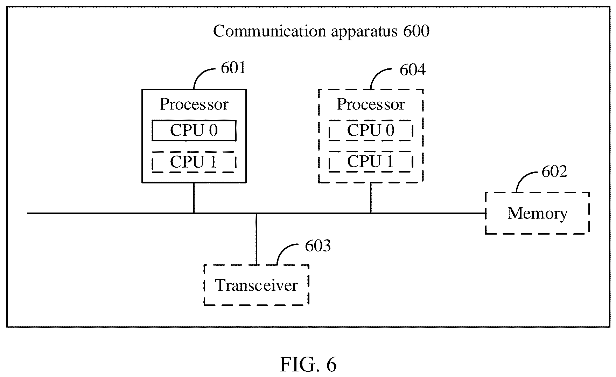

The foregoing describes in detail the method for determining CSI provided in embodiments of this application with reference to FIG. 4. The following describes in detail a communication apparatus configured to perform the method for determining CSI provided in embodiments of this application with reference to FIG. 5 and FIG. 6.

FIG. 5 is a diagram 1 of a structure of a communication apparatus according to an embodiment of this application. For example, as shown in FIG. 5, the communication apparatus 500 includes a transceiver module 501 and a processing module 502. For ease of description, FIG. 5 shows only main components of the communication apparatus.

In some embodiments, the communication apparatus 500 may be used in the communication system shown in FIG. 3, and perform a function of the terminal in the method shown in FIG. 4.

For example, the transceiver module 501 is configured to receive a plurality of reference signals on a plurality of reference signal resources. The processing module 502 is configured to generate CSI. Each of the plurality of reference signal resources is associated with one power offset, and there are a plurality of power offsets in total. The CSI includes a CQI determined based on a precoding matrix. The precoding matrix is determined based on the plurality of reference signals and the plurality of power offsets. Any one of the plurality of power offsets indicates a ratio of transmission energy of downlink data associated with a reference signal resource associated with the power offset to energy of a reference signal on the reference signal resource. The transceiver module 501 is further configured to send the CSI.

In a possible design solution, at least two of the plurality of power offsets have different values.

In a possible design solution, the plurality of reference signals on the plurality of reference signal resources are used to determine a downlink equivalent channel associated with the plurality of reference signal resources, and the precoding matrix is determined based on the downlink equivalent channel and the plurality of power offsets.

Optionally, the downlink equivalent channel and the plurality of power offsets satisfy the following relationship:

$$\left[\sqrt{P_{C1}}\tilde{H}_1, \ldots, \sqrt{P_{Cn}}\tilde{H}_n, \ldots, \sqrt{P_{CN}}\tilde{H}_N\right] \xrightarrow{\text{SVD}} \begin{bmatrix} \tilde{W}_1 \\ \vdots \\ \tilde{W}_n \\ \vdots \\ \tilde{W}_N \end{bmatrix}$$, where $P_{Cn}$ is a power offset associated with an $n^{\text{th}}$ reference

signal resource in the plurality of reference signal resources, $[\tilde{H}_1, \ldots, \tilde{H}_n, \ldots, \tilde{H}_N]$ is the downlink equivalent channel, $n$

ranges from 1 to $N$, $N$ is a quantity of the plurality of reference signal resources, $\begin{bmatrix} \tilde{W}_1 \\ \vdots \\ \tilde{W}_n \\ \vdots \\ \tilde{W}_N \end{bmatrix}$ is the precoding matrix, and SVD is singular value decomposition.

In a possible design solution, the energy of the reference signal on the reference signal resource indicates energy of a reference signal port corresponding to the reference signal resource.

Optionally, the reference signal is a CSI-RS, and energy of a CSI-RS port corresponding to a CSI-RS resource indicates energy of all CSI-RS ports corresponding to the CSI-RS resource.

Further, the energy of all the CSI-RS ports corresponding to the CSI-RS resource indicates energy of all the CSI-RS ports corresponding to the CSI-RS resource on one RE.

In a possible design solution, the transmission energy of the downlink data associated with the reference signal resource associated with the power offset indicates energy of a port that is used for transmission of the downlink data and that corresponds to the reference signal resource.

Optionally, the reference signal resource is a CSI-RS resource. The port used for transmission of the downlink data is a PDSCH port. Energy of the PDSCH port corresponding to the CSI-RS resource indicates energy of all PDSCH ports corresponding to the CSI-RS resource.

Further, the energy of all the PDSCH ports corresponding to the CSI-RS resource indicates energy of all the PDSCH ports corresponding to the CSI-RS resource on one RE.

In a possible design solution, the transceiver module 501 is further configured to receive configuration information. The configuration information indicates the plurality of power offsets.

Optionally, the configuration information is carried in any one of the following messages: an RRC message, a MAC CE message, or a DCI message.

Optionally, the transceiver module 501 may include a sending module (not shown in FIG. 5) and a receiving module (not shown in FIG. 5). The sending module is configured to implement a sending function of the communication apparatus 500, and the receiving module is configured to implement a receiving function of the communication apparatus 500.

Optionally, the communication apparatus 500 may further include a storage module (not shown in FIG. 5), and the storage module stores a program or instructions. When the processing module 502 executes the program or the instructions, the communication apparatus 500 is caused to perform functions of a remote UE or a remote device in the method shown in FIG. 4 in the foregoing method.

It may be understood that the communication apparatus 500 may be a terminal, for example, the remote UE or the remote device, may be a chip (system) or another component or part that may be disposed in the terminal, or may be an apparatus including the terminal. This is not limited in this application.

In addition, for technical effects of the communication apparatus 500, refer to the technical effects of the method for determining CSI shown in FIG. 4. Details are not described herein again.

FIG. 6 is a diagram 2 of a structure of a communication apparatus according to an embodiment of this application. For example, the communication apparatus may be a terminal, or may be a chip (system) or another component or part that may be disposed in the terminal. As shown in FIG. 6, the communication apparatus 600 may include a processor 601. Optionally, the communication apparatus 600 may further include a memory 602 and/or a transceiver 603. The processor 601 is coupled to the memory 602 and the transceiver 603, for example, may be connected to the memory 602 and the transceiver 603 through a communication bus.

The following describes each component of the communication apparatus 600 in detail with reference to FIG. 6.

The processor 601 is a control center of the communication apparatus 600, and may be a processor, or may be a collective term of a plurality of processing elements. For example, the processor 601 is one or more central processing units (central processing unit, CPU), or may be an application-specific integrated circuit (application-specific integrated circuit, ASIC), or is configured as one or more integrated circuits implementing embodiments of this application, for example, one or more microprocessors (digital signal processor, DSP) or one or more field programmable gate arrays (field programmable gate array, FPGA).

Optionally, the processor 601 may perform various functions of the communication apparatus 600 by running or executing a software program stored in the memory 602 and invoking data stored in the memory 602, for example, perform the method for determining CSI shown in FIG. 4.

During specific implementation, in an embodiment, the processor 601 may include one or more CPUs, for example, a CPU 0 and a CPU 1 shown in FIG. 6.

During specific implementation, in an embodiment, the communication apparatus 600 may alternatively include a plurality of processors, for example, the processor 601 and a processor 604 shown in FIG. 6. Each of the processors may be a single-core processor (single-CPU), or may be a multi-core processor (multi-CPU). The processor herein may be one or more devices, circuits, and/or processing cores configured to process data (for example, computer program instructions).

The memory 602 is configured to store the software program for performing the solutions of this application, and the processor 601 controls execution of the software program. For a specific implementation, refer to the foregoing method embodiments. Details are not described herein again.

Optionally, the memory 602 may be a read-only memory (read-only memory, ROM) or another type of static storage device that can store static information and instructions, or may be a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium, or another magnetic storage device, or any other medium that can be used to carry or store expected program code in a form of an instruction or a data structure and that can be accessed by a computer, but this is not limited thereto. The memory 602 may be integrated with the processor 601, or may exist independently, and is coupled to the processor 601 through an interface circuit (not shown in FIG. 6) of the communication apparatus 600. This is not specifically limited in embodiments of this application.

The transceiver 603 is configured to communicate with another communication apparatus. For example, the communication apparatus 600 is a terminal, and the transceiver 603 may be configured to communicate with a network device or communicate with another terminal device. For another example, the communication apparatus 600 is a network device, and the transceiver 603 may be configured to communicate with a terminal or communicate with another network device.

Optionally, the transceiver 603 may include a receiver and a transmitter (not separately shown in FIG. 6). The receiver is configured to implement a receiving function, and the transmitter is configured to implement a sending function.

Optionally, the transceiver 603 may be integrated with the processor 601, or may exist independently, and is coupled to the processor 601 through the interface circuit (not shown in FIG. 6) of the communication apparatus 600. This is not specifically limited in embodiments of this application.

It may be understood that the structure of the communication apparatus 600 shown in FIG. 6 does not constitute a limitation on the communication apparatus. An actual communication apparatus may include more or fewer components than those shown in the figure, or a combination of some components, or different component layout.

In addition, for technical effects of the communication apparatus 600, refer to the technical effects of the methods in the foregoing method embodiments. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the program instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification generally indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a singular item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining channel state information CSI, wherein the method comprises:

   receiving, by a terminal, a plurality of reference signals on a plurality of reference signal resources, wherein each of the plurality of reference signal resources is associated with one power offset, and there are a plurality of power offsets in total; and
   sending, by the terminal, CSI, wherein the CSI comprises a channel quality indicator CQI determined based on a precoding matrix, the precoding matrix is determined based on the plurality of reference signals and the plurality of power offsets, and any one of the plurality of power offsets indicates a ratio of transmission energy of downlink data associated with a reference signal resource associated with the power offset to energy of a reference signal on the reference signal resource.

2. The method according to claim 1, wherein at least two of the plurality of power offsets have different values.

3. The method according to claim 1 or 2, wherein the plurality of reference signals are used to determine a downlink equivalent channel associated with the plurality of reference signal resources, and the precoding matrix is determined based on the downlink equivalent channel and the plurality of power offsets.

4. The method according to claim 3, wherein the downlink equivalent channel and the plurality of power offsets satisfy the following relationship:

$$\left[\sqrt{P_{C1}}\widetilde{H}_1, \ldots, \sqrt{P_{Cn}}\widetilde{H}_n, \ldots, \sqrt{P_{CN}}\widetilde{H}_N\right] \xrightarrow{\text{SVD}} \begin{bmatrix} \widetilde{W}_1 \\ \vdots \\ \widetilde{W}_n \\ \vdots \\ \widetilde{W}_N \end{bmatrix},$$

wherein
$P_{Cn}$ is a power offset associated with an $n^{th}$ reference signal resource in the plurality of reference signal resources, $[\tilde{H}_1, \ldots, \tilde{H}_n, \ldots, \tilde{H}_N]$ is the downlink equivalent channel, n ranges from 1 to $N$, $N$ is a quantity of the plurality of reference

signal resources, $\begin{bmatrix} \widetilde{W}_1 \\ \vdots \\ \widetilde{W}_n \\ \vdots \\ \widetilde{W}_N \end{bmatrix}$ is the precoding matrix, and SVD is singular value decomposition.

5. The method according to any one of claims 1 to 4, wherein the energy of the reference signal on the reference signal resource indicates energy of a reference signal port corresponding to the reference signal resource.

6. The method according to claim 5, wherein the reference signal is a channel state information reference signal CSI-RS, and energy of a CSI-RS port corresponding to the CSI-RS resource indicates energy of all CSI-RS ports corresponding to the CSI-RS resource.

7. The method according to claim 6, wherein the energy of all the CSI-RS ports corresponding to the CSI-RS resource indicates energy of all the CSI-RS ports corresponding to the CSI-RS resource on one resource element RE.

8. The method according to any one of claims 1 to 7, wherein the transmission energy of the downlink data associated with the reference signal resource associated with the power offset indicates energy of a port that is used for transmission of the downlink data and that corresponds to the reference signal resource.

9. The method according to claim 8, wherein the reference signal resource is a CSI-RS resource, the port used for transmission of the downlink data is a physical downlink shared channel PDSCH port, and energy of a PDSCH port corresponding to the CSI-RS resource indicates energy of all PDSCH ports corresponding to the CSI-RS resource.

10. The method according to claim 9, wherein the energy of all the PDSCH ports corresponding to the CSI-RS resource indicates energy of all the PDSCH ports corresponding to the CSI-RS resource on one RE.

11. The method according to any one of claims 1 to 10, wherein the method further comprises:
receiving, by the terminal, configuration information, wherein the configuration information indicates the plurality of power offsets.

12. The method according to claim 11, wherein the configuration information is carried in any one of the following messages: a radio resource control RRC message, a MAC control element MAC CE message, or a downlink control information DCI message.

13. A communication apparatus, wherein the apparatus comprises:

a transceiver module, configured to receive a plurality of reference signals on a plurality of reference signal resources, wherein each of the plurality of reference signal resources is associated with one power offset, and there are a plurality of power offsets in total; and
a processing module, configured to generate channel state information CSI, wherein the CSI comprises a channel quality indicator CQI determined based on a precoding matrix, the precoding matrix is determined based on the plurality of reference signals and the plurality of power offsets, and any one of the plurality of power offsets indicates a ratio of transmission energy of downlink data associated with a reference signal resource associated with the power offset to energy of a reference signal on the reference signal resource, wherein
the transceiver module is further configured to send the CSI.

14. The apparatus according to claim 13, wherein at least two of the plurality of power offsets have different values.

15. The apparatus according to claim 13 or 14, wherein the plurality of reference signals are used to determine a downlink equivalent channel associated with the plurality of reference signal resources, and the precoding matrix is determined based on the downlink equivalent channel and the plurality of power offsets.

16. The apparatus according to claim 15, wherein the downlink equivalent channel and the plurality of power offsets satisfy the following relationship:

$$\left[\sqrt{P_{C1}}\widetilde{H}_1, \ldots, \sqrt{P_{Cn}}\widetilde{H}_n, \ldots, \sqrt{P_{CN}}\widetilde{H}_N\right] \xrightarrow{\text{SVD}} \begin{bmatrix} \widetilde{W}_1 \\ \vdots \\ \widetilde{W}_n \\ \vdots \\ \widetilde{W}_N \end{bmatrix},$$

wherein
$P_{Cn}$ is a power offset associated with an $n^{\text{th}}$ reference signal resource in the plurality of reference signal resources, $[\widetilde{H}_1, \ldots, \widetilde{H}_n, \ldots, \widetilde{H}_N]$ is the downlink equivalent channel, $n$ ranges from 1 to $N$, $N$ is a quantity of the plurality of reference

signal resources, $\begin{bmatrix} \widetilde{W}_1 \\ \vdots \\ \widetilde{W}_n \\ \vdots \\ \widetilde{W}_N \end{bmatrix}$ is the precoding matrix, and SVD is singular value decomposition.

17. The apparatus according to any one of claims 13 to 16, wherein the energy of the reference signal on the reference signal resource indicates energy of a reference signal port corresponding to the reference signal resource.

18. The apparatus according to claim 17, wherein the reference signal is a CSI-RS, and energy of a CSI-RS port corresponding to the channel state information reference signal CSI-RS resource indicates energy of all CSI-RS ports corresponding to the CSI-RS resource.

19. The apparatus according to claim 18, wherein the energy of all the CSI-RS ports corresponding to the CSI-RS resource indicates energy of all the CSI-RS ports corresponding to the CSI-RS resource on one RE.

20. The apparatus according to any one of claims 13 to 19, wherein the transmission energy of the downlink data associated with the reference signal resource associated with the power offset indicates energy of a port that is used for transmission of the downlink data and that corresponds to the reference signal resource.

21. The apparatus according to claim 20, wherein the reference signal resource is a CSI-RS resource, the port used for transmission of the downlink data is a physical downlink shared channel PDSCH port, and energy of a PDSCH port corresponding to the CSI-RS resource indicates energy of all PDSCH ports corresponding to the CSI-RS resource.

22. The apparatus according to claim 21, wherein the energy of all the PDSCH ports corresponding to the CSI-RS resource indicates energy of all the PDSCH ports corresponding to the CSI-RS resource on one RE.

23. The apparatus according to any one of claims 13 to 22, wherein the transceiver module is further configured to receive configuration information, and the configuration information indicates the plurality of power offsets.

24. The apparatus according to claim 23, wherein the configuration information is carried in any one of the following messages: a radio resource control RRC message, a MAC control element MAC CE message, or a downlink control information DCI message.

25. A communication apparatus, comprising a processor and a communication interface, wherein the communication interface is configured to perform communication, and the processor is configured to execute computer instructions, so that the method according to any one of claims 1 to 12 is implemented.

26. A communication apparatus, comprising a memory and a processor, wherein the memory is configured to store computer instructions, and the processor is configured to execute the computer instructions, so that the method according to any one of claims 1 to 12 is implemented.

27. A communication chip, wherein the communication chip stores instructions, and when the chip runs on a communication device, the method according to any one of claims 1 to 12 is implemented.

28. A computer-readable storage medium, wherein the computer-readable storage medium comprises a computer program or instructions, and when the computer program or the instructions are run on a computer, the computer is caused to perform the method according to any one of claims 1 to 12.

29. A computer program product, wherein the computer program product comprises a computer program or instructions, and when the computer program or the instructions are run by a communication apparatus, the method according to any one of claims 1 to 12 is performed.

FIG. 1

FIG. 2

Network
device

· · ·

Network
device

Terminal
device

FIG. 3

S401: A terminal receives a plurality of
reference signals on a plurality of reference
signal resources

S402: The terminal sends CSI

FIG. 4

Communication apparatus 500

502

Processing
module

Transceiver
module

501

FIG. 5

FIG. 6

**INTERNATIONAL SEARCH REPORT**

| International application No. |
| --- |
| **PCT/CN2024/093201** |

| A. | CLASSIFICATION OF SUBJECT MATTER |
| --- | --- |

H04B 7/06(2006.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 信道状态信息, 参考信号, 功率偏移, 能量, 预编码, 信道质量指示, 相干联合传输, channel state information, CSI, reference signal, power offset, energy, precode, channel quality indicator, CQI, coherent joint transmission, CJT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113810090 A (HUAWEI TECHNOLOGIES CO., LTD.) 17 December 2021 (2021-12-17) description, paragraphs 58-72 and 100-233 | 1-29 |
| X | CN 114982148 A (QUALCOMM INC.) 30 August 2022 (2022-08-30) description, paragraphs 42-61 | 1-29 |
| X | ZTE. "R1-2300183 CSI enhancement for high medium UE velocities and CJT" *3GPP tsg_ran\wg1_rl1*, 17 February 2023 (2023-02-17), section 3 | 1-29 |
| A | CN 113615280 A (HUAWEI TECHNOLOGIES CO., LTD.) 05 November 2021 (2021-11-05) entire document | 1-29 |
| A | WO 2021208007 A1 (QUALCOMM INC.) 21 October 2021 (2021-10-21) entire document | 1-29 |
| A | WO 2023051633 A1 (HUAWEI TECHNOLOGIES CO., LTD.) 06 April 2023 (2023-04-06) entire document | 1-29 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 July 2024** | **23 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family me

International application No.

**PCT/CN2024/093201**

| Patent document cited in search report | | | Publication date (day/month/year) | Patent family member(s) | | | Publication date (day/month/year) |
|---|---|---|---|---|---|---|---|
| CN | 113810090 | A | 17 December 2021 | WO | 2021254305 | A1 | 23 December 2021 |
| | | | | EP | 4156540 | A1 | 29 March 2023 |
| | | | | US | 2023128138 | A1 | 27 April 2023 |
| | | | | CN | 113810090 | B | 28 July 2023 |
| | | | | EP | 4156540 | A4 | 08 November 2023 |
| CN | 114982148 | A | 30 August 2022 | WO | 2021151241 | A1 | 05 August 2021 |
| | | | | IN | 202227034420 | A | 04 November 2022 |
| | | | | EP | 4097859 | A1 | 07 December 2022 |
| | | | | US | 2023028703 | A1 | 26 January 2023 |
| | | | | EP | 4097859 | A4 | 04 October 2023 |
| CN | 113615280 | A | 05 November 2021 | WO | 2020199066 | A1 | 08 October 2020 |
| | | | | CN | 113615280 | B | 09 April 2024 |
| WO | 2021208007 | A1 | 21 October 2021 | None | | | |
| WO | 2023051633 | A1 | 06 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310576298X